# EUROPEAN PATENT APPLICATION

(11) **EP 4 400 617 A1**
(43) Date of publication of application: **17.07.2024**
(21) Application number: 24150400.0
(22) Date of filing: 04.01.2024
(51) Int. Cl.: C22B 7/00, C22B 11/00, C22B 1/00, C22B 3/08, C22B 3/10

(54) **PROCESS FOR RECOVERING SILVER FROM SCRAP PHOTOVOLTAIC CELLS**

(30) Priority: 10.01.2023 IT 202300000189
(71) Applicant: 9-Tech S.r.l., 30020 Eraclea (VE) (IT)
(72) Inventor: Cerchier, Pietrogiovanni, I-30020 Eraclea (VE) (IT); Miserocchi, Francesco, I-30020 Eraclea (VE) (IT)
(74) Representative: Belloni, Giancarlo

(57) **Abstract**

The invention concerns a process for recovering silver (10) from a mass of scrap (12) of photovoltaic cells (14). The process comprises the steps of: providing the scrap of photovoltaic cells, each comprising a silicon wafer (16) on the upper surface of which an anti-reflective layer and silver lines are provided; immersing the scrap in water or in an aqueous solution (18); applying ultrasound to cause the silver to detach; sieving the solution to remove the coarse solid fraction containing the silicon wafer residue; and separating the fine solid fraction (22) containing the silver from the solution.

## Description

### TECHNICAL FIELD

The present invention relates to a treatment for the recovery of the silver contained in photovoltaic cells.

### BACKGROUND

Photovoltaic panels represent a strategic resource in the so-called energy transition, i.e. in the transition from the use of non-renewable energy sources, mainly fossil hydrocarbons, to the exploitation of renewable energy sources.

The massive installation that has been encouraged since the 1990s will soon lead to the need to dispose of a large quantity of spent photovoltaic panels. The service life of photovoltaic panels is in fact estimated at around 25-30 years, after which the panel must be replaced because it is no longer productive. Early replacements may be desirable due to the availability of newly developed photovoltaic panels with higher efficiency, while a proportion of panels must be replaced early due to failure or damage. It is estimated that about 1 billion photovoltaic panels are installed in Europe today, with a total mass of 25 million tonnes of material to be recycled.

The proper disposal of the panels is therefore an integral part of the energy transition challenge. However, as explained in detail below, such disposal is not easy and presents technical difficulties.

The most common photovoltaic panels are obtained by hot lamination of a plurality of different layers, including the actual photovoltaic cells.

Each photovoltaic cell comprises a support substrate made of weakly doped silicon. On the front face of the support substrate, a top layer of silicon is arranged that has an opposite doping type to that of the support substrate. For example, if the substrate has P-type doping (boron doping), the upper layer has N-type doping (phosphorus doping). In this way, a PN junction is formed that separates the charges of opposite polarity (electrons and holes) that are generated when the cell is exposed to light radiation. The top layer is typically less than 1 µm thick.

A lower layer of high-doped silicon, of the same doping type as that of the support substrate, is normally placed on the lower face of the support substrate. The lower layer is, for example, about 5 µm thick.

The photovoltaic cell also comprises a plurality of silver lines, relatively evenly distributed on the upper layer, which collect the charges generated in the underlying semiconductor structure. These silver lines are generally composed of an alloy comprising between 93% and 97% of silver. These lines are usually about 20 µm thick and 100 µm wide, and can be spaced by a distance of typically 2 mm.

On the upper layer, around the silver lines, there is usually an anti-reflective layer, made of silicon nitride (Si₃N₄), which makes it possible to limit losses due to the reflection of solar radiation.

The photovoltaic cell also comprises one or more contacts on the lower face of the support substrate, usually a layer of aluminium paste. For example, this lower layer of aluminium may have a thickness comprised between one and a few tens of micrometres.

Lastly, due to the diffusion of aluminium into the silicon that occurs during heat treatment to make the cell, an intermediate layer formed by an alloy of silicon and aluminium may be present between the lower layer of silicon and the lower layer of aluminium. The thickness of this intermediate layer may, for example, be around 10 µm.

In some cases, other silver lines, similar to those described above, can be provided on the lower layer of aluminium.

In light of the above, it is easy to understand how silver is the most valuable material among those found in photovoltaic cells. It can be estimated that, in the mass of solar panels corresponding to an installed capacity of 1 MW, there is a quantity of silver worth approximately 25,000 Euro.

Therefore, processes for recovering silver from both spent photovoltaic panels and photovoltaic cell production waste are of great interest. Most of these processes are based on hydrometallurgical processes involving the complete dissolution of silver. According to these processes, silver passes into solution in the form of an ion, which must then be extracted, typically as a salt by the addition of further reagents, and subsequently reduced.

To overcome the disadvantages of such hydrometallurgical processes, FR 3 096 833 proposes a process designed to treat scrap photovoltaic cells each comprising a silicon wafer on the upper surface of which an anti-reflective layer is provided, and a plurality of silver lines.

The process of FR 3 096 833 comprises, in succession, the two steps of:
- attacking the anti-reflective layer by immersing the scrap in a hydrofluoric acid (HF) solution at a concentration of 0.5% to 5%; and
- attacking the upper layer of the wafer by immersion of the scrap, now free of the anti-reflective layer, into a sodium hydroxide (NaOH) solution at a concentration comprised between 1% and 30%.

This results in the separation of the silver lines. The process then involves drying the assembly formed by the wafer residues and the separated silver lines, and finally extracting the silver lines in their solid state.

As can be easily understood, this process has the considerable advantage of recovering silver directly in the solid state, so that it can be melted down and reused without any other intermediate operations.

However, although it represents a considerable improvement on the previous technique, the process proposed by FR 3 096 833 is not free from disadvantages either.

It requires the entire mass of scrap to undergo two different chemical treatments to make the silver available. Moreover, both treatments must be carried out with reagents (hydrofluoric acid and sodium hydroxide) which, although used in low concentrations, are potentially very dangerous and therefore require specific precautions and plant solutions. Moreover, the process requires a large quantity of such reagents, as they are very aggressive towards silicon.

There is therefore a need for a new process that further improves known solutions.

### OBJECTS AND SUMMARY OF THE INVENTION

The object of the present invention is therefore to overcome the drawbacks highlighted above in relation to the prior art.

In particular, a task of the present invention is to make available a process for recovering silver from photovoltaic cell scrap that requires, in its broad outline, a single treatment with chemical reagents.

As already mentioned, photovoltaic cell scrap can come either from the recycling of end-of-life photovoltaic panels or from production waste of the photovoltaic cells themselves.

Furthermore, a task of the present invention is to make available a process for recovering silver from photovoltaic cell scrap that does not require the use of hazardous chemical reagents.

Yet another task of the present invention is to make available a process for recovering silver from photovoltaic cell scrap that limits silicon and aluminium losses and, consequently, the consumption of reagents.

Lastly, it is a task of the present invention to make available a process for recovering silver from photovoltaic cell scrap that not only makes possible the advantages described above, but also maintains the main advantages of the processes of the prior art, in particular the possibility of purifying silicon and recovering silver.

These and other purposes and tasks of the present invention are achieved by a process for recovering silver from photovoltaic cell scrap in accordance with claim 1. Further features are identified in the dependent claims. All the attached claims form an integral part of the present description.

The invention concerns a process for recovering silver from a mass of photovoltaic cell scrap. The process of the invention comprises the steps of:
- Providing a mass of scrap photovoltaic cells each comprising a silicon wafer having an upper surface and a lower surface, wherein:
   - an anti-reflection layer is provided on the upper surface, and
   - silver lines are provided on the anti-reflection layer;
- Immersing the scrap in water or in an aqueous solution;
- Applying ultrasound to the water or aqueous solution and the scrap immersed in it until the silver is detached;
- Sifting the water or aqueous solution to remove the coarse solid fraction containing the silicon wafer residue; and
- Separating the fine solid fraction containing silver from the water or aqueous solution.

In its simplest form, the process of the invention allows the use of no chemical reagents, only ultrasound.

Preferably, the aqueous solution may contain an organic acid or organic complexing agent selected from the group comprising: citric acid, tartaric acid, lactic acid, malic acid, acetic acid, formic acid and ethylenediaminetetraacetic acid (EDTA).

This particular process of the invention allows only one chemical reagent to be used. Moreover, this reagent is selected from a group of reagents known to be of low hazard.

Preferably the ultrasound has a frequency comprised between 10 kHz and 100 kHz, more preferably the ultrasound has a frequency comprised between 20 kHz and 40 kHz, even more preferably the ultrasound has a frequency of around 25 kHz.

According to studies conducted by the Applicant, the application of ultrasound, particularly at these frequencies, can significantly accelerate the detachment of the silver lines.

In some types of photovoltaic cells, a layer of aluminium paste is provided on the lower surface of the silicon wafer and second silver lines are provided on the layer of aluminium paste. In these cases, the process of the invention also comprises the step of waiting for the second silver lines to detach.

During the step of waiting for the second silver lines to detach, at least partial detachment of the layer of aluminium paste may occur. In these cases, where the fine solid fraction also contains aluminium, the step of separating the fine solid fraction from water or aqueous solution extracts the silver and aluminium together.

In this particular embodiment, the process of the invention also allows the treatment of photovoltaic cell scrap comprising aluminium and silver on the lower surface.

In some embodiments of the process described above, the silver is separated from the aluminium by flotation or screening.

These treatments have the advantage of recovering silver by purely mechanical means.

In other embodiments of the process described above, aluminium is dissolved in a solution of sodium hydroxide (NaOH) or sulphuric acid (H₂SO₄) or hydrochloric acid (HCl).

Also in these embodiments, although a second reagent is used, the process of the invention is still advantageous compared to the prior art. In fact, this second treatment affects less than 15% of the total mass of the initial scrap and avoids silicon losses, particularly when sodium hydroxide is used.

In addition, the pulverulent, rather than flaky, form of the fine solid fraction containing the silver facilitates washing by preventing reagent residue as would occur between overlapping flakes.

Similarly, if silver dissolution treatment is to be pursued using known techniques (e.g. nitric acid), the two advantages described above (i.e. treating a smaller quantity of material and the fact that it is in powder form) are equally valid.

In accordance with other embodiments, the silver is recovered from the fine solid fraction by pyrometallurgical means, directly during the melting of the silver. In this case, in fact, the fine solid fraction is melted under oxidising conditions so that the aluminium is brought into the slag as an oxide.

Preferably, the aqueous solution of the organic acid or complexing agent has a concentration comprised between 1% and 50%, preferably comprised between 2% and 15%, even more preferably around 5%.

Preferably the water or aqueous solution is maintained at a temperature above 50°C, preferably comprised between 50°C and 100°C.

Preferably, the ultrasound is applied via ultrasonic transducers applied to the bottom of the tank where the scrap is immersed.

Preferably, the ultrasound has a specific power greater than 100W per litre of water or aqueous solution.

In accordance with the studies conducted by the Applicant, these process parameters allow for silver detachment, possibly with partial dissolution of the anti-reflective layer and/or partial detachment or dissolution of the layer of aluminium paste, in an industrially acceptable time frame.

Further features, objects and advantages of the present invention will be more evident from the description of the accompanying drawings.

### BRIEF DESCRIPTION OF THE DRAWINGS

The invention is described hereinbelow with reference to certain examples provided by way of non-limiting example and illustrated in the accompanying drawings. These drawings illustrate different aspects and embodiments of the present invention and reference numerals illustrating structures, components, materials and/or similar elements in different drawings are indicated by similar reference numerals, where appropriate. Moreover, for clarity of illustration, certain references may not be repeated in all drawings.
Figures 1 to 6 schematically represent the successive steps of the process according to the invention; and

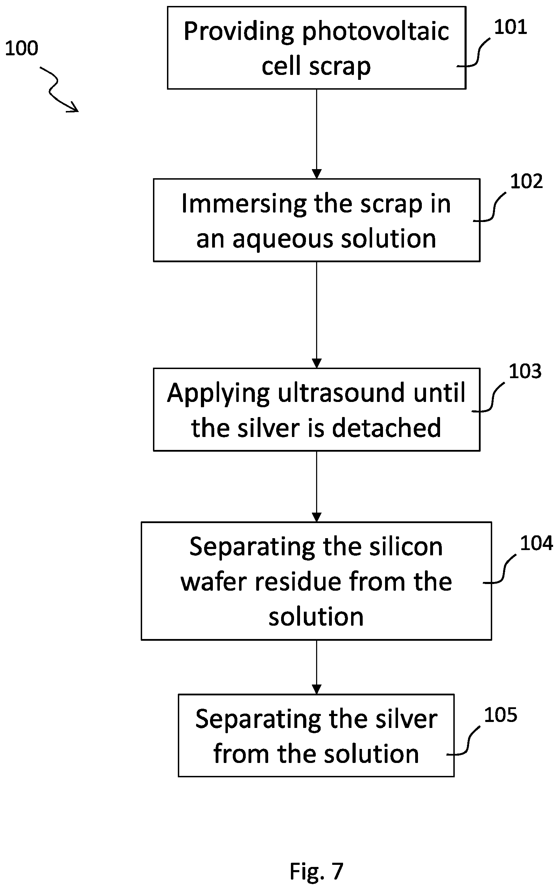

figure 7 represents a block diagram of the process according to the invention.

### DETAILED DESCRIPTION OF THE INVENTION

While the invention is susceptible to various modifications and alternative constructions, certain preferred embodiments are shown in the drawings and are described hereinbelow in detail. It must in any case be understood that there is no intention to limit the invention to the specific embodiment illustrated, but, on the contrary, the invention intends covering all the modifications, alternative and equivalent constructions that fall within the scope of the invention as defined in the claims.

The description addresses in detail the peculiar technical aspects and features of the invention, while the known aspects and technical features per se can only be mentioned. In these respects, what is stated above with reference to the prior art valid.

The use of "for example", "etc.", "or" indicates non-exclusive alternatives without limitation, unless otherwise indicated. The use of "comprises", "contains" and "includes" means "comprises or contains or includes, but not limited to", unless otherwise indicated.

The invention is intended to operate on photovoltaic cells that face the prevailing path of the sun during their operational life. In view of this, in this discussion the term "upper" is used to denote a part of the photovoltaic cell which, in operational life, faces the sun, while the term "lower" denotes a part of the photovoltaic cell, opposite the upper one, which in operational life faces the opposite way to the sun.

The invention relates to a process (100) for recovering the silver 10 present in a mass of scrap 12 of photovoltaic cells 14. The process of the invention comprises the steps of:
- (101) Providing a mass of scrap 12 of photovoltaic cells 14 each comprising a silicon wafer 16 having an upper surface and a lower surface, wherein:
   - an anti-reflection layer is provided on the upper surface, and
   - silver lines are provided on the anti-reflection layer 10;
- (102) Immersing the scrap 12 in a water or in an aqueous solution 18;
- (103) Applying ultrasound to the water or aqueous solution 18 and to the scrap 12 immersed in it until the silver 10 is detached;
- (104) Sifting the water or aqueous solution 18 to remove the coarse solid fraction 20 containing the silicon wafer residue 16; and
- (105) Separating the fine solid fraction 22 containing silver 10 from the water or aqueous solution 18.

Preferably, the aqueous solution 18 may comprise an organic acid or organic complexing agent selected from the group comprising: citric acid, tartaric acid, lactic acid, malic acid, acetic acid, formic acid and ethylenediaminetetraacetic acid (EDTA).

As mentioned, processing the scrap 12 of photovoltaic cells 14 yields a coarse solid fraction 20, containing the silicon wafer residue, and a fine solid fraction 22, containing silver 10 or, as will be described below, silver and aluminium. The coarse solid fraction 20 retains a grain size substantially the same as that of the scrap 12 that was initially immersed in water or aqueous solution 18. Therefore, the coarse solid fraction 20 can simply be separated using a sieve. In contrast, the fine solid fraction 22, containing silver 10 and/or aluminium, is made up of fragments of a much finer grain size, and as a whole takes the form of a powder. Therefore, the fine solid fraction 22 can be separated by known techniques such as filtration, centrifugation or settling. Preferably, separation of the fine solid fraction 22 from water or aqueous solution 18 is carried out continuously, so as to improve the effectiveness of the process.

It should first be noted that the process of the invention, in its general form, does not require any chemical reagents. In other words, in the most general form of the process (100), the scrap 12 is immersed in simple water 18 and the only treatment to which the scrap 12 is subjected is mechanical, carried out by means of ultrasound. Therefore, for simplicity of exposition, in the following description the expression "aqueous solution" can also mean simple water.

In other embodiments of the process (100), there is only one step in which chemical reagents are used, while all other steps only involve mechanical treatment. This implies significant advantages over the prior art.

Moreover, as a person skilled in the art knows, citric acid, tartaric acid, lactic acid, malic acid, acetic acid, formic acid and EDTA are low-hazard reagents and, when used industrially, do not require costly processes to protect the safety of operators and the environment. It is therefore understandable how the process of the invention is even more advantageous than processes of the prior art.

It should be noted here that the unit cost of the reagent used in the process of the invention (be it citric acid, tartaric acid, lactic acid, malic acid, acetic acid, formic acid or EDTA) may in some cases exceed the unit cost of the reagents used in known processes. However, this higher unit cost is largely compensated for by other factors. Firstly, only one reagent is used in the process of the invention instead of two reagents in succession. Secondly, as mentioned above, the low hazardousness of the reagent significantly reduces safety-related costs.

Furthermore, since at the end of the treatment the residues of silicon wafers 16 remain in flake form, a form that makes them difficult to wash and dry, the use of non-hazardous reagents decreases the hazardousness of treating the coarse solid fraction 20 in the case of imperfect washing out of reagent residues.

Lastly, the process of the invention uses less reagent, as it is much less reactive than the reagents used in the prior art.

The scrap 12 of photovoltaic cells 14 may comprise whole or nearly whole photovoltaic cells 14 or, in other cases, photovoltaic cells 14 ground and reduced to a more or less fine grit state. The type of scrap 12 may depend, for example, on the method used upstream to disassemble the spent photovoltaic panels. The average size or grain size of the scrap 12 of photovoltaic cells 14 determines the size or grain size of the coarse solid fraction 20.

In some types of photovoltaic cells 14 other silver lines 10 are also present at the origin, referred to below as "second silver lines" when it is necessary to distinguish them from those described above, which will therefore also be referred to as "first silver lines". In particular, a layer of aluminium paste may be provided on the lower surface of the silicon wafer 16 and second silver lines 10 may be provided on the layer of aluminium paste.

The process of the invention also allows this type of photovoltaic cells 14 to be treated. In such cases, once the scrap 12 is immersed in the aqueous solution 18 (102) and ultrasound is applied (103), the process comprises the further step of waiting for the detachment of the second silver lines 10. In this case, therefore, in addition to the silver 10 and the silicon wafer residue 16, the solid fraction of the resulting solution 18 generally also contains a portion of aluminium from the layer of aluminium paste of the lower surface of the wafer. Preferably, in these cases, the step of separating the fine solid fraction 22 from water or aqueous solution 18 results in a mixture of silver 10 and aluminium, mixed together, both in the solid state and in the form of a coarse powder or fragments of reduced particle size.

In these cases, the process therefore requires further processing of the fine solid fraction 22 to separate the silver 10 from the aluminium. In accordance with some embodiments of the invention, the silver 10 is separated from the aluminium by flotation or screening, thereby exploiting the different densities of the two materials in a manner known in itself.

In accordance with other embodiments, the silver is recovered from the fine solid fraction 22 by pyrometallurgical means, directly during the melting of the silver. In this case, in fact, the fine solid fraction 22 is melted under oxidising conditions so that the aluminium is brought into the slag as an oxide.

In accordance with other embodiments of the invention, the fine solid fraction 22 is treated with a solution of sodium hydroxide (NaOH) or sulphuric acid (H₂SO₄) or hydrochloric acid (HCl), in which the aluminium is dissolved while the silver 10 remains undissolved.

In this respect, it should be noted that, although sodium hydroxide or the mentioned acids are rather dangerous reagents involving costly precautions, in the case of the invention their use entails a minimal disadvantage compared to their use in the prior art. Indeed, while in the prior art sodium hydroxide is used in large quantities to treat the entire mass of scrap 12, in the case of the invention hazardous reagents are needed in a significantly smaller quantity since only the fine solid fraction 22 obtained from the scrap 12 is to be treated. Usually, the mass of this fraction represents less than 15% of the entire initial mass of scrap 12.

Moreover, the powder form assumed by the fine solid fraction 22 facilitates its washing, preventing reagent residues from remaining, as would occur between overlapping flakes.

Similarly, if silver dissolution treatment is to be pursued using known techniques (e.g. nitric acid), the two advantages described above (i.e. treating a smaller quantity of material and the fact that it is in powder form) are equally valid.

Preferably, the aqueous solution 18 of the organic acid or complexing agent has a concentration comprised between 1% and 50%, preferably comprised between 2% and 15%, even more preferably around 5%.

The ultrasound may have a frequency comprised between 10 kHz and 100 kHz, preferably comprised between 20 kHz and 40 kHz, advantageously around 25 kHz. The application of ultrasound makes it possible in some cases to substitute the chemical action carried out by the organic acid or complexing agent.

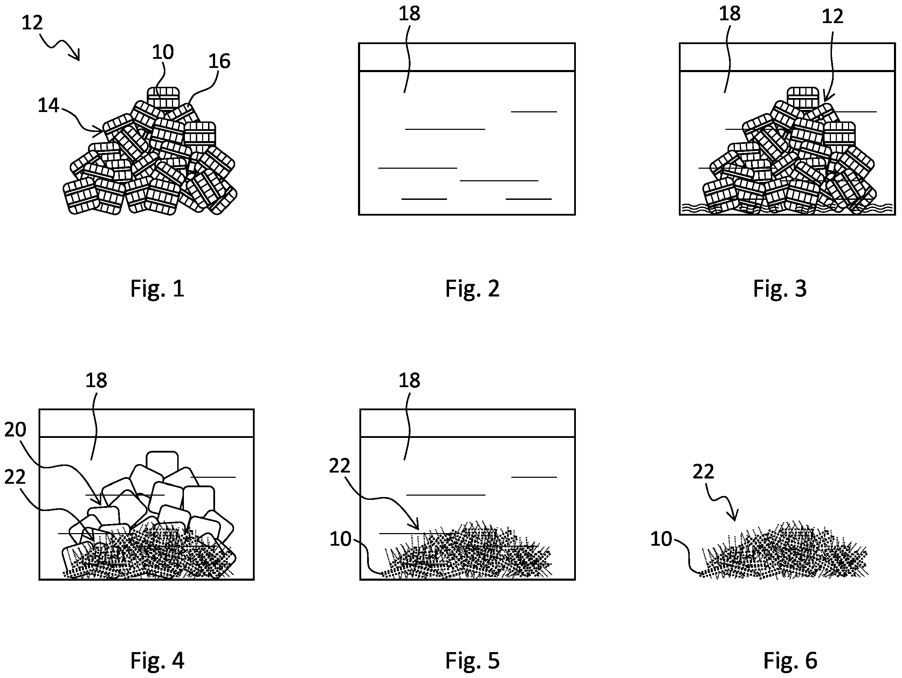

Preferably, ultrasound is applied via ultrasonic transducers applied directly to the bottom of the tank where the scrap 12 is immersed (see figure 3).

Preferably, ultrasound is applied with a specific power of more than 100W per litre of water or aqueous solution.

Preferably, while ultrasound is applied, the scrap 12 is moved within the aqueous solution 18 so that it does not form piles and so that the individual flakes of photovoltaic cells 14 do not shield each other from the action of the ultrasound.

Preferably, during the process of the invention, the aqueous solution 18 is maintained at a temperature greater than 50°C, preferably comprised between 50°C and 100°C. In particular, it is desirable to control the temperature of the solution 18 during the step (102) of immersing the scrap 12 and the step (103) of waiting for the detachment of the silver 10.

### EXAMPLES

In the examples described below, small quantities of scrap 12 of photovoltaic cells 14 were treated in small quantities of aqueous solution 18, varying the parameters of the process and the type of organic acid or complexing agent, if any. In all the examples, an excess of solution 18 with respect to the mass of scrap 12 was maintained. The photovoltaic cells 14 used in the examples comprised a rear layer of aluminium paste and silver lines 10 on both sides. The results were evaluated on a case-by-case basis by visually estimating the percentage of silver and aluminium that was removed from the cells 14. The optimum percentage of detached silver is 100%, but results above 85% are also considered acceptable for industrial application.

### First Example

In a first example, 1 g of photovoltaic cells was treated in 50 ml of a 25% aqueous citric acid solution. The cells, placed in a 100ml capacity beaker, were soaked for 3 hours and the solution was maintained at a temperature of 90°C. This treatment resulted in a partial removal of aluminium in an estimated 5%-10%. The percentage of silver made available by detachment from the treated cells was around 40%-50%. This embodiment of the treatment was therefore not satisfactory.

### Second Example

To improve the results obtained with Example 1, it was proposed to apply ultrasound to the solution and to the cells immersed in it. In this second example, the mass of cells was decreased slightly: 0.75 g of photovoltaic cells in 50 ml of 25% aqueous citric acid solution at 90°C. At the end of the 3-hour immersion, ultrasound was applied to the solution and the cells immersed in it for 5 minutes using a commercial Argolab AU-32 bath equipped with two ultrasonic transducers of 60W each, for a total power of 120W at 37 kHz. More precisely, once the bath was filled with 1.5 l of water, the beaker containing the solution and the photovoltaic cells was placed inside the bath. As a result, 120W of ultrasonic power was applied to a volume of water of 1.5 l, i.e. 80W/l. The application of ultrasound considerably increased the removal of aluminium, by an estimated 40%-50%. What is most important, however, is that the percentage of silver made available by detachment from the treated cells has risen to 90%-95%. In addition, the solution contained little dissolved silver (94 ppm) and relatively little aluminium (625 ppm). This embodiment of the treatment was therefore very satisfactory.

### Third Example

Given the marked improvement in results obtained through the application of ultrasound, an attempt was made to determine what role ultrasound could play, regardless of the use of an organic acid or complexing agent in the solution. For this purpose, in the third example, 0.75 g of cells were immersed in 50 ml of water in a 100 ml capacity beaker and the water was left to boil for 3 hours. Using a commercial Argolab AU-32 bath equipped with two ultrasonic transducers of 60W each, for a total power of 120W at 37 kHz, ultrasound was applied for 5 minutes every 25 minutes of immersion. The commercial bath is also equipped with a 100W resistor that was used to maintain the temperature. More precisely, once the bath was filled with 1.5 1 of water, the beaker containing water and photovoltaic cells was placed inside the bath where it was kept for the duration of the experiment. As a result, 120W of ultrasonic power was applied to a volume of water of 1.51, i.e. 80W/l. This process did not achieve any results; in particular, no effect could be appreciated on silver, whose detachment rate therefore stands at 0%. This embodiment of the process is therefore unsatisfactory.

### Fourth Example

In this fourth example, 0.75 g of photovoltaic cells were immersed in a 100 ml beaker containing 50 ml of 20% aqueous lactic acid solution. The cells were kept immersed for 3 hours and the solution was maintained at a temperature of 90°C. Again, as in the third example, using a commercial Argolab AU-32 bath, equipped with two ultrasonic transducers of 60W each, for a total power of 120W at 37 kHz, ultrasound was applied for 5 minutes every 25 minutes of immersion. The commercial bath is also equipped with a 100W resistor that was used to keep the solution at the correct temperature. More precisely, once the bath was filled with 1.51 of water, the beaker containing the solution and photovoltaic cells was placed inside the bath where it was kept for the duration of the experiment. As a result, 120W of ultrasonic power was applied to a volume of water of 1.5 l, i.e. 80W/l. A rather high removal of aluminium was achieved, with an estimated percentage of 40%-50%. The percentage of silver made available by detachment from the treated cells reached 85%-90%. Furthermore, the solution contained little dissolved silver (74 ppm) but more dissolved aluminium than previous tests (1904 ppm).

### Fifth Example

In this fifth example, 0.75 g of photovoltaic cells were immersed in a 100 ml beaker containing 50 ml of 20% aqueous tartaric acid solution. The cells were kept immersed for 2 hours and the solution was maintained at a temperature of 80°C. Again, as in the second example, using a commercial Argolab AU-32 bath, equipped with two ultrasonic transducers of 60W each, for a total power of 120W at 37 kHz, ultrasound was applied for 5 minutes every 25 minutes of immersion. The commercial bath is also equipped with a 100W resistor that was used to keep the solution at the correct temperature. More precisely, once the bath was filled with 1.51 of water, the beaker containing the solution and photovoltaic cells was placed inside the bath where it was kept for the duration of the experiment. As a result, 120W of ultrasonic power was applied to a volume of water of 1.5 l, i.e. 80W/l. A rather high removal of aluminium was achieved, with an estimated percentage of 40%-50%. All the silver detached, thus reaching the ideal percentage of 100%. In addition, the solution contained little dissolved silver (91 ppm) and relatively little dissolved aluminium (852 ppm). This embodiment of the treatment was therefore very satisfactory, similarly to the second example.

### Sixth Example

In this sixth example, 2 g of photovoltaic cells were immersed in 100 ml of 20% aqueous thiourea solution. The cells were kept immersed for 2 hours and the solution was maintained at a temperature of 90°C. Using a commercial Argolab AU-32 bath, equipped with two ultrasonic transducers of 60W each, for a total power of 120W at 37 kHz, ultrasound was applied for 5 minutes every 25 minutes of immersion. The commercial bath is also equipped with a 100W resistor that was used to keep the solution at the correct temperature. More precisely, once the bath was filled with 1.5 l of water, the beaker containing the solution and photovoltaic cells was placed inside the bath where it was kept for the duration of the experiment. As a result, 120W of ultrasonic power was applied to a volume of water of 1.5 l, i.e. 80W/l. Low aluminium removal was achieved, at an estimated percentage of 20%-25%. Although the estimated percentage of silver removed from the cells was good, equal to about 80%, the treatment is not satisfactory because in this case the silver did not detach itself remaining in the solid state but partially entered the solution. In fact, the solution contained a lot of dissolved silver (1743 ppm) despite the small amount of dissolved aluminium (198 ppm). This embodiment of the treatment with thiourea is therefore unsatisfactory because it suffers from the disadvantages that affect hydrometallurgical procedures of the prior art.

### Seventh Example

In this seventh example, 0.75 g of photovoltaic cells were immersed in 50 ml of 3% aqueous hydrofluoric acid solution. The cells were kept immersed for 3 hours and the solution was maintained at a temperature of 50°C. Using a commercial Argolab AU-32 bath, equipped with two ultrasonic transducers of 60W each, for a total power of 120W at 37 kHz, ultrasound was applied for 5 minutes every 25 minutes of immersion. The commercial bath is also equipped with a 100W resistor that was used to keep the solution at the correct temperature. More precisely, once the bath was filled with 1.5 l of water, the beaker containing the solution and photovoltaic cells was placed inside the bath where it was kept for the duration of the experiment. As a result, 120W of ultrasonic power was applied to a volume of water of 1.5 l, i.e. 80W/l. A high aluminium removal rate of 80% and an estimated silver removal rate of about 10% were achieved. Furthermore, although the solution contained little dissolved silver (54 ppm), it had a lot of dissolved aluminium (4032 ppm). This form of treatment is therefore unsatisfactory due to the hazardous nature of hydrofluoric acid and, above all, the poor results.

### Eighth Example

In this eighth example, 0.75 g of photovoltaic cells were immersed in 50 ml of 20% aqueous EDTA solution. The cells were kept immersed for 6 hours and the solution was maintained at a temperature of 90°C. Using a commercial Argolab AU-32 bath, equipped with two ultrasonic transducers of 60W each, for a total power of 120W at 37 kHz, ultrasound was applied for 5 minutes every 25 minutes of immersion. The commercial bath is also equipped with a 100W resistor that was used to keep the solution at the correct temperature. More precisely, once the bath was filled with 1.5 1 of water, the beaker containing the solution and photovoltaic cells was placed inside the bath where it was kept for the duration of the experiment. As a result, 120W of ultrasonic power was applied to a volume of water of 1.5 l, i.e. 80W/l. A rather high removal of aluminium was achieved, with an estimated percentage of 40%-50%. The percentage of silver made available by detachment from the treated cells reached 85%-90%. Compared to the other examples, the solution still contained little dissolved silver (93.6 ppm) but much more dissolved aluminium (3669 ppm). This embodiment of the treatment was therefore quite satisfactory.

### Ninth Example

In this ninth example, 50 g of photovoltaic cells were immersed in 1500 ml of a 5% aqueous citric acid solution at room temperature, directly inside a 5-litre capacity ultrasonic tank. The tank was equipped with 5 ultrasonic transducers at the bottom connected to a Unitech Titako generator that was used with 400W power at a frequency of 25 kHz. In this case, the specific power was therefore 266 W/l. The cells were kept immersed for 15 minutes and ultrasound was applied to the solution for the duration of the test. The solution was heated by the effect of ultrasound to a temperature of 55°. A rather high aluminium detachment was achieved, with an estimated percentage of 40%-50%. The percentage of silver made available by detachment from the treated cells reached 95%-100%.

### Tenth Example

In this tenth example, 50 g of photovoltaic cells were immersed in 1500 ml of water at room temperature directly inside a 5-litre capacity ultrasonic tank equipped with 5 ultrasonic transducers at the bottom connected to a Unitech Titako generator employed with 400W power and a 25 kHz frequency. In this case, the specific power is therefore 266 W/l. The cells were kept immersed for 35 minutes applying ultrasound for the duration of the test and the solution heated up to a temperature of 55°C. A rather high aluminium detachment was obtained, with an estimated percentage of 40%-50%. The percentage of silver made available by detachment from the treated cells reached 95%-100%. This example shows that by using sufficient time and ultrasound power (approx. 266W/l compared to 80W/l in the third example), it is also possible to use only water for silver detachment.

### Eleventh Example

In this eleventh example, 20 g of photovoltaic cells were immersed in 500 ml of 5% citric acid and water at room temperature directly inside a beaker with a capacity of 1 litre. A Get Wave ultrasound probe connected to a Unitech Titako generator used with 300W power and 21 kHz frequency was immersed into it. In this case, the specific power is therefore 150W/l. The cells were kept immersed for 10 minutes applying ultrasound for the duration of the test and the solution was heated up to a temperature of 30°C. An estimated 30%-50% of the aluminium detached and the silver did not detach. In this case, due to the high agitation in the bath and the violent cavitation caused by the ultrasound, the cell fragments were broken up by the ultrasound into very small pieces. This last example was therefore not at all satisfactory and demonstrates how applying ultrasound incorrectly will not detach the silver and will damage the material.

As those skilled in the art can well understand, the invention overcomes the drawbacks highlighted above in relation to the prior art.

In particular, the invention makes available a process for recovering silver 10 from the scrap 12 of photovoltaic cells 14 that does not require, in its broad outline, any treatment with chemical reagents.

Furthermore, the invention makes available a process for recovering silver 10 from the scrap 12 of photovoltaic cells 14 that does not require the use of hazardous chemical reagents.

Furthermore, the invention makes available a process for recovering silver 10 from the scrap 12 of photovoltaic cells 14 which, using weak acids, limits silicon and aluminium losses and, consequently, reagent consumption.

Lastly, the invention makes available a process for recovering silver 10 from the scrap 12 of photovoltaic cells 14 which not only makes possible the advantages described above, but also maintains the main advantages of the processes of the prior art.

The description above delves into the innovative aspects of the invention and the differences between it and known solutions. For all other aspects, known as such, that the invention shares with the prior art, what has been described in the introduction in relation to known solutions remains valid.

In conclusion, all the details can be replaced with other technically-equivalent elements; the features described in connection with a specific embodiment can also be used in other embodiments; the materials used, as well as the contingent shapes and dimensions, can be any according to the specific implementation requirements without thereby falling outside the scope of protection of the following claims.

## Claims

1. Process (100) for recovering silver (10) from a mass of scrap (12) of photovoltaic cells (14), comprising the steps of:
- (101) Providing a mass of scrap (12) of photovoltaic cells (14) each comprising a silicon wafer (16) having an upper surface and a lower surface, wherein:
- an anti-reflection layer is provided on the upper surface, and
- silver lines (10) are provided on the anti-reflection layer;
- (102) Immersing the scrap (12) in water or in an aqueous solution (18);
- (103) Applying ultrasound to the water or aqueous solution (18) and to the scrap (12) immersed in it until the silver (10) is detached;
- (104) Sifting the water or aqueous solution (18) to remove the coarse solid fraction (20) containing the silicon wafer residue (16); and
- (105) Separating the fine solid fraction (22) containing silver (10) from the water or aqueous solution (18).

2. Process (100) according to claim 1, wherein the aqueous solution comprises an organic acid or organic complexing agent, selected from the group comprising: citric acid, lactic acid, tartaric acid, malic acid, acetic acid, formic acid and ethylenediaminetetraacetic acid (EDTA).

3. Process (100) according to claim 1 or 2, wherein a layer of aluminium paste is provided on the lower surface of the silicon wafer (16) and second silver lines (10) are provided on the layer of aluminium paste; and wherein the process (100) further comprises the step of waiting for the second silver lines (10) to detach.

4. Process (100) in accordance with claim 3, wherein during the step of waiting for the second silver lines (10) to detach, at least partial detachment of the layer of aluminium paste occurs, and wherein:
- the fine solid fraction (22) also contains aluminium; and
- the step of separating the fine solid fraction (22) from water or aqueous solution (18) extracts silver (10) and aluminium together.

5. Process according to claim 4, wherein, in the fine solid fraction (22), silver (10) is separated from aluminium by flotation or screening.

6. Process according to claim 4, wherein, in the fine solid fraction (22), aluminium is dissolved in a solution of sodium hydroxide (NaOH) or sulphuric acid (H₂SO₄) or hydrochloric acid (HCl).

7. Process according to claim 4, wherein, in the fine solid fraction (22), silver (10) is separated from aluminium by pyrometallurgical means.

8. Process according to one or more of claims 2 to 7, wherein the aqueous solution (18) of the organic acid or complexing agent has a concentration comprised between 1% and 50%, preferably comprised between 5% and 10%.

9. Process according to one or more of the preceding claims, wherein the ultrasound applied to water or aqueous solution (18) and to the scrap (12) immersed therein has a frequency comprised between 10 kHz and 100 kHz, preferably they have a frequency comprised between 20 kHz and 40 kHz, more preferably they have a frequency of about 25 kHz.

10. Process according to one or more of the preceding claims, wherein the ultrasound is applied via ultrasonic transducers applied to the bottom of the tank where the scrap (12) is immersed.

11. Process according to one or more of the preceding claims, wherein the ultrasound power exceeds 100W per litre of water or aqueous solution (18).

12. Process according to one or more of the preceding claims, wherein the water or aqueous solution (18) is maintained at a temperature higher than 50°C, preferably comprised between 50°C and 100°C.
